# EUROPÄISCHE PATENTSCHRIFT

(11) **EP 0 673 670 B1**
(45) Veröffentlichungstag und Bekanntmachung des Hinweises auf die Patenterteilung: **14.01.1998**
(21) Anmeldenummer: 95104138.3
(22) Anmeldetag: 21.03.1995
(51) Int. Cl.: B01D 53/73, C22B 7/02

(54) **Verfahren zur Aufbereitung und Verwertung metallhaltiger Abscheidungen aus der Gasreinigung bei der thermischen Abfallbehandlung**
Method of processing and recovering metalliferous deposits resulting from the purification of gases during the thermal treatment of wastes
Procédé de traitement et de valorisation de dépôts métallifères produits au cours de l'épuration des gaz pendant le traitement thermique de déchets

(30) Priorität: 25.03.1994 DE 4410473; 05.05.1994 DE 4415947
(43) Veröffentlichungstag der Anmeldung: 27.09.1995
(73) Patentinhaber: THERMOSELECT AKTIENGESELLSCHAFT, FL-9490 Vaduz (LI)
(72) Erfinder: Kiss, Günter H., CH-6648 Minusio (CH)
(74) Vertreter: Pfenning, Meinig & Partner

(56) Entgegenhaltungen:
- EP-A- 0 324 454
- EP-A- 0 362 125
- EP-A- 0 482 335
- DE-C- 3 614 814
- FR-A- 2 547 210

## Beschreibung

Die Erfindung betrifft ein Verfahren zur Aufbereitung und Verwertung metallhaltiger Abscheidungen aus der Gasreinigung bei der thermischen Abfallbehandlung, die als metallhaltige wäßrige Niederschläge, Metallschlämme oder dergleichen Reinigungssumpf anfallen. Ein derartiges Verfahren wird zum Beispiel in der EP-A-0 324 454 beschrieben.

Bei der thermischen Müllverwertung entweichen die im Müll enthaltenen Metallverbindungen, deren Siedepunkt unter der Prozeßtemperatur liegt, zusammen mit den gasförmigen Produkten und gelangen so in die nachgeschaltete Gasreinigung. In der Gasreinigung und -kühlung werden die Metallverbindungen durch Kondensation und Fällung separiert, wobei ein wäßriger Schwermetallhydroxid- bzw. -sulfidschlamm anfällt. Auf Grund der relativ geringen Mengen von ca. 8 kg Reinigungssumpf pro Tonne Müll, der Heterogenität dieser Schlammmzusammensetzung, der relativ leicht, d.h. bei niedrigen Temperaturen verdunstenden Schwermetallkomponenten (z.B. Quecksilber) und der Inhaltsstoffe, die Chlorionen oder dergleichen die Verhüttung beeinträchtigende Komponenten enthalten, erschien eine wirtschaftliche Verwertung des Metallsumpfes bisher nicht sinnvoll und nicht möglich. Diese Schlämme sind hochtoxisch und darüber hinaus chemisch instabil, so daß sie in verschlossenen Fässern oder sonstigen Gebinden als Giftmüll deponiert werden mußten.

Um die chemische Instabilität und die Umweltbelastung dieser Stoffe zu reduzieren, werden verschiedene Verfahren, wie z.B. Zementierung, Keramisierung und Verglasung, vorgeschlagen. Der Vorteil dieser Verfahren besteht darin, daß ihre Lagerfähigkeit verbessert wird. Eine Verwertbarkeit der Metallkomponenten konnte jedoch bisher nicht erreicht werden. Der Metallinhalt dieser Stoffe ist somit verloren. Die Zugabe von Stabilisatoren, wie z.B. Zement, Glas und Ton, führt dazu, daß das zu deponierende Volumen wesentlich vergrößert wird. Darüber hinaus besteht die Gefahr, daß bei thermischer Behandlung der Schlämme toxische Substanzen mit einem niedrigen Siedepunkt und Schwermetalle, die bereits bei Umgebungstemperatur zumindest teilweise verdunsten, wie z.B. Quecksilber, unkontrolliert freigesetzt werden.

Die Lagerung der im Zement eingegossenen Schwermetalle in offenen Deponien ist bedenklich, da eine langfristige Eluatbeständigkeit einzementierter Schwermetallverbindungen nicht gegeben ist und somit die Gefahr besteht, daß die ausgewaschenen Schwermetallkomponenten zu einer Grundwasserverseuchung führen können. Auch bei der Verglasung wird nur eine über längere Zeit auslösbare Einbindung der Schwermetalle erreicht. Durch Rißbildung in der Verglasung können Schwermetalle freigesetzt werden.

Aufgabe der vorliegenden Erfindung ist es daher, ein Verfahren der eingangs genannten Art zu entwickeln, mit dem zumindest wirtschaftlich interessante Komponenten des Metallschlammes einer metallurgischen Verwertung zugeführt werden können, wobei nicht nur die Recycling-Rate verschiedener Metalle verbessert, sondern durch Eliminierung toxischer Substanzen auch die Umweltbelastung durch den verbliebenen Rest herabgesetzt werden soll, bei gleichzeitiger Verringerung des Volumens der zu deponierenden Reststoffe.

Die Lösung dieser Aufgabe wird erfindungsgemäß durch die im Anspruch 1 angegebenen Merkmale erreicht. Die Unteransprüche zeigen Weiterentwicklungen dieser Aufgabenlösung.

Dadurch, daß die Schlämme zunächst einer Naßwäsche unterzogen werden, werden gröbere Verunreinigungen entfernt, die die nachfolgenden Verfahrensstufen beeinträchtigen könnten.

Die Schwermetallschlämme werden zunächst getrocknet und Metallkomponenten, die bei Umgebungstemperatur verdunsten, wie z.B. Quecksilber, zusammen mit dem Wasserdampf kontrolliert abgezogen. Hierdurch ergibt sich bei einfachstem Verfahrensablauf zunächst eine besonders günstige Vortrennung und Volumenreduzierung. Durch eine gezielte Kühlung kondensiert der Wasserdampf zusammen mit den leicht flüchtigen Schwermetallen, die damit einfach separiert und getrennt weiterbehandelt werden können.

Falls anschließend der so vorbehandelte Metallsumpf gegebenenfalls nach Zwischenlagerung mittels an sich bekannter Methoden der Hydrometallurgie erneut in Lösung gebracht wird, lassen sich durch Ionenaustausch, Elektrolyse und/oder Metallionenextraktion reine Metalle oder Metallverbindungen selektiv zurückgewinnen. Die Menge der Rückstände wird reduziert, und die Toxidität der Rückstände wird vermindert.

Nunmehr können in vorteilhafter Weise alle während der gesamten Aufbereitung anfallenden Gase, nachdem ihnen die flüchtigen Metallbestandteile entzogen wurden, einer Hochtemperaturstufe, die wiederum vorteilhaft Bestandteil der thermischen Abfallbehandlungsanlage ist, zugeführt werden. In der Hochtemperaturstufe können die Gase entgiftet und anschließend problemlos entsorgt werden, so daß das erfindungsgemäße Verfahren bezüglich der Gasphase emissionsfrei von Schwermetallen ist.

Bei der Hydrometallurgie freigesetzter Schwefelwasserstoff kann durch Oxidation in Schwefel oder Sulfationen umgewandelt und so direkt einer Wiederverwendung zugeführt werden.

Thermische Abfallbehandlungsanlagen liefern Überschußenergie, die in Form von Abwärme, häufig auch noch als elektrische Energie, zur Verfügung steht. Somit kann der für den Aufbereitungsprozeß erforderliche Energiebedarf ohne Zusatz- bzw. Fremd-Energie gedeckt werden.

Wird bei der selektiven hydrometallurgischen Aufbereitung die Abtrennung von in Lösung vorliegenden Chlorionen oder dergleichen Anionen und in dem Metallsumpf dispergierten Fällungsprodukten, wie Metallhydroxide, -sulfide und -karbonate, durch Zugabe von Flotationsmitteln verbessert und beschleunigt, so läßt sich die Wirtschaftlichkeit des erfindungsgemäßen Verfahrens noch deutlich steigern.

Das Reinigungswasser der Naßwäsche des Metallsumpfes kann zusammen mit dem beim Trocknungsprozeß anfallenden Brüden dem Abwasserkreislauf der Gaswäsche wieder zugeführt werden. Auf diese Weise kann das Verfahren auch bezüglich des Abwassers umweltneutral gefahren werden.

Eine weitere Verbesserung des Verfahrens kann dadurch erzielt werden, daß die gereinigten und getrockneten Metallverbindungen vor der hydrometallurgischen Aufbereitung mit einem geeigneten Bindemittel, das den anschließenden Verhüttungsprozeß nicht beeinträchtigt, vermischt und zu verhüttungsfähigen Pellets od.dgl. gepreßt werden. Eine Zwischenlagerung aus Gründen des gesteuerten Produktionsablaufes oder ein gegebenenfalls notwendig werdender Transport wird durch diese Maßnahme vereinfacht.

## Patentansprüche

1. Verfahren zur Aufbereitung und Verwertung metallhaltiger Abscheidungen aus der Gasreinigung einer thermischen Abfallbehandlung, die als metallhaltige wäßrige Niederschläge, Metallschlämme oder dergleichen Reinigungssumpf anfallen,
a) bei dem die Abscheidungen zunächst einer Naßwäsche unterzogen werden,
b) nachfolgend in einem Trockenvorgang Feuchtigkeit und bei niederen Temperaturen flüchtige Metalle separiert werden, wobei die flüchtigen Metalle, insbesondere Quecksilber, aus der Gasphase durch Kondensation rückgewonnen werden,
c) anschließend der so vorbehandelte Metallsumpf, gegebenenfalls nach Zwischenlagerung mittels Methoden der Hydrometallurgie, erneut in Lösung gebracht wird, um selektiv durch Ionenaustausch, Elektrolyse und/oder Metallionenextraktion zu reinen Metallen oder Metallverbindungen aufbereitet zu werden,
d) und bei dem schließlich alle während der gesamten Aufbereitung anfallenden Gase, nachdem ihnen die flüchtigen Metallbestandteile entzogen wurden, einer Hochtemperaturstufe zugeführt, entgiftet und entsorgt werden.

2. Verfahren nach Anspruch 1,
dadurch gekennzeichnet, daß die bei der Hydrometallurgie freigesetzten Schwefelwasserstoffe durch Oxidation in Schwefel oder Sulfationen umgewandelt werden.

3. Verfahren nach Anspruch 1,
dadurch gekennzeichnet, daß der für den Aufbereitungsprozeß erforderliche Energiebedarf durch die bei der thermischen Abfallbehandlung anfallende Überschußenergie aufgebracht wird.

4. Verfahren nach Anspruch 1,
dadurch gekennzeichnet, daß für die selektive hydrometallurgische Aufbereitung die Abtrennung von in Lösung vorliegenden Chlorionen oder dergleichen Anionen und in dem Metallsumpf dispergierten Fällungsprodukten wie Metallhydroxide, -sulfide und -karbonate durch Zugabe von Flotationsmitteln verbessert und beschleunigt wird.

5. Verfahren nach Anspruch 1,
dadurch gekennzeichnet, daß das Reinigungswasser der Naßwäsche des Metallsumpfes zusammen mit dem beim Trocknungsprozeß anfallenden Brüden dem Abwasserkreislauf der Gaswäsche wieder zugeführt wird.

6. Verfahren nach Anspruch 1,
dadurch gekennzeichnet, daß der metallhaltige Sumpf vor der hydrometallurgischen Aufbereitung transport- und zwischenlagerungsfähig unter Zugabe von Bindemitteln pelletiert wird.

## Claims

1. Process for the preparation and utilization of metal-containing deposits from the gaseous emission control system of a thermal waste treatment, which deposits arise as metal-containing aqueous precipitates, metal sludges or clean-up bottom phase of the like,
a) in which the deposits are first subjected to a wet wash,
b) subsequently, in a dry process, moisture and metals which are volatile at relatively low temperatures are separated, the volatile metals, in particular mercury, being recovered from the gas phase by condensation,
c) the metal bottom phase thus pretreated, if appropriate after intermediate storage, is then resolubilized by means of hydrometallurgical methods, in order to be prepared selectively by iron exchange, electrolysis and/or metal iron extraction to give pure metals or metal compounds,
d) and in which, finally, all the gases arising during the entire preparation, after the volatile metal constituents have been removed from them, are fed to a high-temperature stage, detoxified and disposed of.

2. Process according to Claim 1, characterized in that the hydrogen sulfides released in the hydrometallurgy are converted into sulphur or sulphate ions by oxidation.

3. Process according to Claim 1, characterized in that the energy requirement necessary for the preparation process is supplied by the excess energy arising during the thermal waste treatment.

4. Process according to Claim 1, characterized in that the removal of chloride ions and anions of the like present in solution and precipitation products dispersed in the metal bottom phase, such as metal hydroxides, metal sulfides and metal carbonates, are improved and accelerated by adding floatation agents for the selective hydrometallurgical preparation.

5. Process according to Claim 1, characterized in that the clean-up water of the wet wash of the metal bottom phase is fed, together with the vapours arising in the drying process, back to the waste water circuit of the gas scrubber.

6. Process according to Claim 1, characterized in that the metal-containing bottom phase is pelleted so as to make it capable of transport and intermediate storage, by adding binders, prior to the hydrometallurgical preparation.

## Revendications

1. Procédé pour la valorisation et l'utilisation de dépôts métalliques provenant de la purification de gaz produits lors d'un traitement thermique de déchets, qui en résultent sous la forme de dépôts aqueux métalliques, de boues métalliques ou de bains de sédimentation de purification analogues,
a) par lequel les dépôts sont d'abord soumis à un lavage humide,
b) puis l'humidité est séparée lors d'une étape de séchage et les métaux volatils sont séparés à basse température, les métaux volatils, en particulier le mercure, étant récupérés par condensation à partir de la phase gazeuse,
c) ensuite le bain de sédimentation métallique ainsi traité est à nouveau amené en solution, éventuellement après entreposage par mise en oeuvre de procédés d'hydrométallurgie, afin d'être valorisé de façon sélective par échange d'ions, par électrolyse et/ou par extraction des ions métalliques en métaux purs ou en composés métalliques,
d) et par lequel enfin tous les gaz résultant de l'ensemble du procédé de valorisation, après avoir été débarrassés des constituants métalliques volatils, sont amenés à une température élevée, décontaminés et éliminés.

2. Procédé selon la revendication 1, caractérisé en ce que les substances de type acide sulfhydrique libérées par les processus d'hydrométallurgie sont convertis en soufre ou en ions sulfates par oxydation.

3. Procédé selon la revendication 1, caractérisé en ce que les besoins en énergie nécessaires pour le procédé de valorisation sont couverts par l'énergie en excès résultant du traitement thermique des déchets.

4. Procédé selon la revendication 1, caractérisé en ce qu'en vue de la valorisation sélective par hydrométallurgie, la séparation des ions dérivés du chlore ou des anions équivalents présents en solution et des produits de précipitation dispersés dans le bain de décantation métallique, tels que les hydroxydes métalliques, les sulfures métalliques et les carbonates métalliques est améliorée et accélérée par addition d'agents favorisant la flottation.

5. Procédé selon la revendication 1, caractérisé en ce que l'eau de purification pour le lavage humide des bains de décantation métalliques ensemble avec les vapeurs du cycle de traitement des déchets apparaissant lors du procédé de séchage sont reconduites au circuit des eaux usées du lavage des gaz.

6. Procédé selon la revendication 1, caractérisé en ce que les bains de décantation métalliques sont, avant valorisation hydrométallurgique, agglomérés en boulettes par addition d'agents liants de façon à les rendre transportables et entreposables.
